# EUROPÄISCHE PATENTSCHRIFT

(11) **EP 3 204 927 B1**
(45) Veröffentlichungstag und Bekanntmachung des Hinweises auf die Patenterteilung: **13.01.2021**
(21) Anmeldenummer: 15787148.4
(22) Anmeldetag: 08.10.2015
(51) Int. Cl.: G08G 1/0962, G08G 1/0967, G05D 1/02

(54) **VERFAHREN ZUM BETREIBEN EINES ZENTRALEN SERVERS UND VERFAHREN ZUM HANDHABEN EINER REGELKARTE**
METHOD FOR OPERATING A CENTRAL SERVER AND METHOD FOR HANDLING A RULE CHART
PROCÉDÉ POUR EXPLOITER UN SERVEUR CENTRAL ET PROCÉDÉ POUR UTILISER UNE CARTE DE RÈGLES DE CIRCULATION

(30) Priorität: 10.10.2014 DE 102014220625
(43) Veröffentlichungstag der Anmeldung: 16.08.2017
(73) Patentinhaber: Continental Teves AG & Co. OHG, 60488 Frankfurt am Main (DE)
(72) Erfinder: ZYDEK, Bastian, 65812 Bad Soden (DE); GROTENDORST, Thomas, 65760 Eschborn (DE); KELLING, Enno, 65760 Eschborn (DE); LÜKE, Stefan, 61191 Rosbach vor der Höhe (DE); MENZEL, Marc, 35096 Weimar (Lahn) (DE)
(86) Internationale Anmeldenummer: PCT/EP2015/073240
(87) Internationale Veröffentlichungsnummer: WO 2016/055560

(56) Entgegenhaltungen:
- EP-A2- 1 569 183
- DE-A1-102010 030 867
- DE-A1-102012 021 282
- DE-A1-102014 003 550
- US-A1- 2014 278 029
- M. CAMPBELL ET AL: "Autonomous driving in urban environments: approaches, lessons and challenges", PHILOSOPHICAL TRANSACTIONS OF THE ROYAL SOCIETY A: MATHEMATICAL, PHYSICAL AND ENGINEERING SCIENCES, Bd. 5469, Nr. 1928, 13. Oktober 2010 (2010-10-13), Seiten 4649-4672, XP055235487, ISSN: 1939-3539, DOI: 10.1098/rsta.2010.0110

## Beschreibung

Die Erfindung betrifft ein Verfahren zum Betreiben eines zentralen Servers und ein Verfahren zum Handhaben einer Verkehrsregeln enthaltenden Regelkarte in einem Fahrzeug.

Verkehrsregeln werden heutzutage im Regelfall durch allgemein gültige Regeln wie rechts-vor-links, durch Verkehrsschilder, durch Lichtzeichen oder durch Verkehrspolizisten festgelegt. Individuell lenkbare Fahrzeuge wie Kraftfahrzeuge oder Fahrräder, Schienenfahrzeuge wie Straßenbahnen und auch Fußgänger vermeiden durch Beachtung dieser Regeln mögliche Kollisionen und Unfälle. Dies gilt beispielsweise für Vorfahrtsregeln, jedoch auch für andere Verkehrsregeln wie beispielsweise Überholverbote.

Bei heutigen Fahrzeugen und anderen Verkehrsteilnehmern werden Verkehrsregeln üblicherweise vom Fahrer oder Fußgänger von Verkehrsschildern, Lichtzeichen oder Verkehrspolizisten abgelesen oder anhand einer bestimmten Verkehrslage ermittelt. So kann ein Fahrer beispielsweise anhand fehlender Verkehrszeichen an einer Kreuzung erkennen, dass dort die Grundregel rechts-vor-links gilt. Entsprechend kann er anhand anderer an der Kreuzung befindlicher Fahrzeuge ableiten, ob er Vorfahrt hat oder nicht, also die Vorfahrt gewähren muss. Sieht der Fahrer einen Verkehrspolizisten, kann er ebenfalls ablesen ob er weiterfahren darf oder nicht. Nähert sich ein Fahrzeug einer Einmündung, beispielsweise einer Auffahrt auf eine Autobahn oder eine andere Fernverkehrsstraße, so kann der Fahrer je nach in dem Land geltenden Gesetzen ermitteln, ob ein einscherendes Fahrzeug grundsätzlich auf eine Lücke im fließenden Verkehr warten muss, oder ob dem einfahrenden Fahrzeug Vorrang zu gewähren ist.

Die manuelle Erfassung von Verkehrsregeln ist immer mit dem Risiko menschlichen Versagens verbunden. Aus einer falschen Erfassung oder auch vorsätzlichen Missachtung von Verkehrsregeln resultiert ein sehr hohes Unfallrisiko. Deshalb wurden bereits Systeme entwickelt, welche beispielsweise mittels einer Kamera Verkehrsregeln erfassen und den Fahrer bei der Beachtung der Verkehrsregeln unterstützen können. Allerdings können diese Systeme einen Unfall insbesondere dann nicht verhindern, wenn bei zumindest einem Fahrzeug, welches an einer zu regelnden Situation beteiligt ist, zumindest eine Verkehrsregel falsch erfasst wird. Dies kann beispielsweise aufgrund technischer Fehler oder auch aufgrund schwierigen Erkennungssituationen wie einem schneebedeckten Verkehrsschild erfolgen.

Das Dokument US 2014/0278029 A1 offenbart Verfahren und Software zum Verwalten der Prioritäten von Fahrzeugen, welche sich einer Konfliktzone nähern. Dabei kann ein ad-hoc-Netzwerk zum Entwickeln eines lokalen Verkehrsleitplans aufgebaut werden.

Es ist deshalb eine Aufgabe der Erfindung, ein alternatives, beispielsweise verbessertes Verfahren zur Handhabung von Verkehrsregeln bereitzustellen. Dies wird erfindungsgemäß durch ein Verfahren nach Anspruch 1, und ein Verfahren nach Anspruch 17 erreicht. Vorteilhafte Ausgestaltungen können beispielsweise den jeweiligen abhängigen Ansprüchen entnommen werden. Der Inhalt der Ansprüche wird durch ausdrückliche Inbezugnahme zum Inhalt der Beschreibung gemacht.

Die Erfindung betrifft ein Verfahren zum Betreiben eines zentralen Servers zum Verwalten von Verkehrsregeln enthaltenden Regelkarten, wobei das Verfahren folgende Schritte aufweist:
- Erstellen einer zu sendenden Regelkarte in einem Abstimmungsschritt, wobei der Abstimmungsschritt ansprechend darauf ausgeführt wird, dass bei einem Vergleich ermittelt wurde, dass zumindest eine erste Regelkarte und eine zweite Regelkarte nicht übereinstimmen,
- Senden der Regelkarte an ein Fahrzeug.

Mittels des erfindungsgemäßen Verfahrens können Verkehrsregeln zentral verwaltet werden. Dies erlaubt eine unmittelbare Versorgung von Fahrzeugen mit Regelkarten und darin enthaltenen Verkehrsregeln, so dass diese nicht mehr auf die Erfassung von Verkehrsregeln mittels lokaler Sensorik angewiesen sind. Außerdem ist ein Abgleich der Verkehrsregeln mehrerer Fahrzeuge möglich. Es kann dabei beispielsweise der Fall verhindert werden, dass zwei sich kreuzende Fahrzeuge an einer Kreuzung dem jeweiligen Fahrer anzeigen, er habe Vorfahrt, da die Fahrzeuge bei Verwendung des erfindungsgemäßen Verfahrens zuverlässig zentral mit Regelkarten versorgt werden. Dies stellt jedoch nur einen möglichen Anwendungsbereich des erfindungsgemäßen Verfahrens dar, zahlreiche weitere Anwendungen sind möglich, beispielsweise diejenigen, welche weiter unten beschrieben werden.

Die Verwendung einer Regelkarte ist insbesondere vorteilhaft, weil sich eine solche Karte nicht darauf beschränkt die Verkehrsregeln für das eigene Fahrzeug zu umfassen, sondern auch die für andere Verkehrsteilnehmer, insbesondere Fahrzeuge, geltenden Verkehrsregeln beinhalten kann. Mit einer solchen Karte werden auf einer technischen Ebene die Rahmenbedingungen geschaffen, die nicht nur die für einen selbst geltenden Verkehrsregeln berücksichtigen, sondern auch solche, die für andere Verkehrsteilnehmer gelten.

Der zentrale Server kann auch als Back-End oder als globales Back-End bezeichnet werden.

Unter Verkehrsregeln können insbesondere Vorfahrt beziehungsweise Vorfahrt gewähren sowie ein Überholverbot verstanden werden. Auch andere Verkehrsregeln können jedoch mittels des erfindungsgemäßen Verfahrens verarbeitet werden, beispielsweise Geschwindigkeitsbegrenzungen oder Halteverbote.

Unter einer Regelkarte wird insbesondere eine Zusammenstellung von Verkehrsregeln verstanden, welche beispielsweise einer zu regelnden Situation und/oder einem zu regelnden Straßenabschnitt oder einem Gebiet zugeordnet sind. Insbesondere kann eine respondieren, beispielsweise Vorfahrtsregeln für jede Straße und jede Fahrtrichtung von mehreren Straßen, welche sich an einer Kreuzung kreuzen, oder Vorfahrtsregeln für eine Autobahn und eine Einfädelspur der Autobahn. Idealerweise sollten die Verkehrsregeln derart zueinander korrespondieren, dass bei Beachtung der Verkehrsregeln eine Kollision der beteiligten Fahrzeuge vermieden wird. Beispielsweise kann dies bedeuten, dass bei einer Kreuzung beide Richtungen einer durchgehenden Straße Vorfahrt erhalten, während beide Richtungen einer kreuzenden Straße Vorfahrt gewähren erhalten. Bei einer Einmündung kann dies bedeuten, dass dem durchfahrenden Verkehr oder dem einmündenden Verkehr Vorfahrt gewährt wird. Bei einer Straße mit Überholmöglichkeit kann dies bedeuten, dass bei Gegenverkehrt ein temporäres Überholverbot erzeugt wird, beispielsweise ein Überholverbot hinsichtlich des Überholens eines langsam fahrenden Fahrzeugs wie eines Lastkraftwagens oder eines landwirtschaftlichen Fahrzeugs.

Eine Regelkarte kann beispielsweise dazu verwendet werden, dem Fahrer die darin enthaltenen Verkehrsregeln auf der Instrumententafel oder in einem Head-up-Display anzuzeigen. Sie kann jedoch beispielsweise auch im Rahmen eines Systems zum autonomen Fahren verwendet werden oder für ein Assistenzsystem.

Gemäß einer Ausführung ist vorgesehen, dass
- das Senden bzw. das Verfahren ansprechend auf einen Empfang einer Aufforderung zum Senden einer Regelkarte von einem Fahrzeug ausgeführt wird,
- wobei die Aufforderung vorzugsweise Informationen über die zu sendende Regelkarte enthält.

Damit kann beispielsweise ein Fahrzeug, welches eine Annäherung an eine bestimmte Kreuzung feststellt, eine Regelkarte mittels einer Aufforderung zum Senden gezielt anfordern. Die Aufforderung enthält dabei bevorzugt Informationen darüber, um welche Kreuzung oder sonstige Position es sich handelt. Die Aufforderung kann auch weitere Informationen enthalten, beispielsweise über selbst erkannte Verkehrsregeln oder über andere erkannte Fahrzeuge.

Gemäß einer Ausführung ist vorgesehen, dass das Senden bzw. das Verfahren ansprechend auf einen Empfang einer Regelkarte von einem Fahrzeug ausgeführt wird.

Damit kann ein Fahrzeug eine selbst erstellte Regelkarte mit selbst erkannten Verkehrsregeln oder auch eine von einem anderen Fahrzeug erhaltene Regelkarte an den Server senden, wobei der Server die Regelkarte beispielsweise bestätigen, verifizieren, korrigieren oder durch eine andere Regelkarte ersetzen kann. Er kann auch die von dem Fahrzeug erhaltene Regelkarte zum Aktualisieren einer Datenbank mit Regelkarten verwenden.

Außerdem wird ermöglicht, dass ein nachfolgendes Fahrzeug vor einem beabsichtigten Überholvorgang bei dem zentralen Server nachfrägt, ob ein Überholvorgang möglich ist. Der zentrale Server kann in diesem Fall insbesondere auf eine Regelkarte zurückgreifen, welche von einem vorherfahrenden, typischerweise langsam fahrenden Fahrzeug erzeugt und an den Server übermittelt wurde. Wenn bei dem langsam fahrenden Fahrzeug kein Gegenverkehr erkannt wird, kann eine Regelkarte erzeugt werden, welche kein Überholverbot enthält. Wenn Gegenverkehr erkannt wird, kann eine Regelkarte erzeugt werden, welche ein temporäres Überholverbot enthält. Diese Regelkarte wird dann über den zentralen Server an das nachfolgende Fahrzeug übermittelt und zeigt diesem an, ob ein Überholvorgang möglich ist oder besser unterlassen werden soll.

Das nachfolgende Fahrzeug kann die Aufforderung zum Senden einer Regelkarte insbesondere ansprechend auf ein Angebot zur Mitwirkung bei einem Überholvorgang senden, wobei in diesem Angebot das langsam fahrende Fahrzeug nachfolgenden Fahrzeugen mitteilen kann, dass es zur Mitwirkung bei der Planung eines Überholvorgangs in der Lage ist. Das Angebot kann beispielsweise direkt oder auch über den zentralen Server gesendet werden.

Das Aussenden von Regelkarten kann von dem Server auch kontinuierlich ausgeführt werden. Damit können beispielsweise Fahrzeuge, insbesondere solche, welche an einer regelungsbedürftigen Situation beteiligt sind, laufend ihre Regelkarten austauschen oder Regelkarten empfangen, insbesondere um etwaige Probleme, beispielsweise nicht korrespondierende oder nicht übereinstimmende Regelkarten, so früh wie möglich zu erkennen und Unfällen vorzubeugen. Das Verfahren kann auch derart ausgeführt werden, dass der Server eine oder mehrere Regelkarten laufend sendet, unabhängig davon ob sie von einem anderen Fahrzeug oder einer anderen Einheit empfangen wird.

Gemäß einer Ausführung ist vorgesehen, dass die zu sendende Regelkarte aus einer Datenbank ausgelesen wird.

In einer solchen Datenbank werden vorzugsweise Regelkarten für eine Anzahl oder Vielzahl von Kreuzungen gespeichert. Dies erlaubt eine effiziente Verwaltung der Regelkarten. Beispielsweise kann es sich um eine SQL-Datenbank handeln.

Gemäß einer Ausführung ist vorgesehen, dass die zu sendende Regelkarte in einem Abstimmungsschritt erstellt wird.

Dies ermöglicht die Erstellung einer Regelkarte, insbesondere bei dem zentralen Server auch in einem Abstimmungsprozess oder Abstimmungsschritt, in welchen die Fahrzeuge oder von den Fahrzeugen gelieferte Informationen einbezogen werden können. teiligter Fahrzeuge. Insbesondere kann damit auf zumindest zunächst unklare Situationen reagiert werden.

Gemäß einer Ausführung ist vorgesehen, dass der Abstimmungsschritt ansprechend darauf ausgeführt wird, dass bei einem Vergleich ermittelt wurde, dass zumindest eine erste Regelkarte und eine zweite Regelkarte nicht übereinstimmen.

Damit kann für den Fall, dass Regelkarten nicht übereinstimmen, ein Abstimmvorgang oder Abstimmschritt ausgelöst werden, welcher beispielsweise zu übereinstimmenden und das Unfallrisiko weiter senkenden Regelkarten führen kann. Unter nicht übereinstimmenden Regelkarten werden insbesondere Regelkarten verstanden, welche für zumindest ein tatsächlich vorhandenes oder auch nur für ein möglicherweise vorhandenes Fahrzeug zumindest zwei unterschiedliche Verkehrsregeln anzeigen. Beispielsweise können zwei nicht übereinstimmende Regelkarten derart aufgebaut sein, dass eine Regelkarte für eine bestimmte Straße an einer Kreuzung in einer bestimmten Richtung Vorfahrt anzeigt, wohingegen die andere Regelkarte Vorfahrt gewähren anzeigt. Übereinstimmende Regelkarten zeigen typischerweise für alle möglichen Fahrzeugstandorte die jeweils gleichen Verkehrsregeln an.

Wenn die Regelkarten übereinstimmen, wird typischerweise kein Abstimmschritt ausgelöst. In diesem Fall kann beispielsweise eine Mitteilung der beteiligten Fahrzeuge direkt untereinander oder über den zentralen Server gesendet werden, wobei die Mitteilung anzeigt, dass die Regelkarten übereinstimmen. Dies zeigt an, dass die Kreuzung basierend auf den übereinstimmenden Regelkarten ohne Gefahr von allen beteiligten Fahrzeugen passiert werden kann.

Gemäß einer Ausführung ist vorgesehen, dass
- die zweite Regelkarte von einem anderen Fahrzeug empfangen wurde oder aus einer Datenbank ausgelesen wurde.

Dies ermöglicht insbesondere einen Vergleich zwischen Regelkarten, welche von unterschiedlichen Fahrzeugen beispielsweise mittels jeweiliger Umfeldsensoren erzeugt wurden. Es können jedoch auch beispielsweise eine aus einer Datenbank ausgelesene Regelkarte und eine von einem Fahrzeug empfangene Regelkarte miteinander verglichen werden.

Gemäß einer Ausführung ist vorgesehen, dass die erste Regelkarte, die zweite Regelkarte und die zu sendende Regelkarte einer Kreuzung, einer Einmündung oder einer Straße zugeordnet sind.

Dies entspricht typischen regelungsbedürftigen Situationen.

Gemäß einer Ausführung ist vorgesehen, dass
- der Abstimmungsschritt zur Abstimmung zwischen einer Anzahl daran beteiligter Fahrzeuge durchgeführt wird,
- wobei die zu sendende Regelkarte vorzugsweise an alle beteiligten Fahrzeuge gesendet wird.

Dabei können insbesondere Regelkarten als Basis verwendet werden, welche von den Fahrzeugen empfangen wurden, wobei diese beispielsweise von den jeweiligen Fahrzeugen mittels Umfeldsensoren wie Kameras erfasst wurden.

Gemäß einer Ausführung ist vorgesehen, dass an dem Abstimmungsschritt das Fahrzeug sowie andere Fahrzeuge beteiligt sind, welche sich einer Kreuzung oder Einmündung annähern oder welche auf der gleichen Straße fahren. Gemäß einer weiteren, damit auch kombinierbaren Ausführung ist vorgesehen, dass an dem Abstimmungsschritt ausschließlich Fahrzeuge beteiligt sind, von Dies entspricht typischen Gruppen von Fahrzeugen, zwischen welchen ein Abgleich von Verkehrsregeln beziehungsweise diese Verkehrsregeln enthaltenden Regelkarten vorteilhaft ist.

Gemäß einer Ausführung ist vorgesehen, dass der Abstimmungsschritt durch Abgleich von Regelkarten und/oder Plausibilisierungsinformationen von daran beteiligten Fahrzeugen erfolgt.

Damit können von dem Server Regelkarten verbessert, beispielsweise iterativ verbessert werden, so dass eine gemeinsame Regelkarte für alle Fahrzeuge erzeugt wird. Plausibilisierungsinformationen können dabei beispielsweise begleitende Informationen sein, beispielsweise über Zuverlässigkeiten. Beispielsweise kann es sich dabei um die andernorts beschriebenen Informationen oder Daten handeln, welche zusammen mit einer Regelkarte gesendet werden können. Informationen über Zuverlässigkeiten, beispielsweise von Umfeldsensoren, können beispielsweise dazu verwendet werden, bestimmten Regelkarten den Vorzug zu geben oder ihnen ein höheres Gewicht beizumessen, wenn sie unter Verwendung besonders zuverlässiger Sensoren erzeugt wurden.

Gemäß einer Ausführung ist vorgesehen, dass ein Abgleich von Regelkarten und/oder Plausibilisierungsinformationen eine jeweilige Plausibilisierung beinhaltet, wobei eine Plausibilisierung vorzugsweise einen oder mehrere der folgenden Schritte aufweist:
- Bewertung und/oder Gewichtung vorliegender Informationen, insbesondere in Bezug auf Informationen beteiligter Fahrzeuge,
- Erfassen der Signifikanz und/oder Zuverlässigkeit von Informationen,
- Überprüfen, welche Fahrzeuge identische Informationen haben oder identische Informationen gesendet haben,
- Ergänzen von Informationen, wenn diese komplementär sind.

Im Rahmen einer jeweiligen Plausibilisierung können jeweilige Regelkarten ausgewertet und/oder verändert werden, so dass eine Regelkarte entsteht, welche dann alle beteiligten Fahrzeuge verwenden können beziehungsweise welche für alle Fahrzeuge gilt. Wenn identische Informationen mehrerer Fahrzeuge vorliegen, so haben diese Informationen typischerweise eine höhere Konfidenz, so dass sie für die Erstellung einer gemeinsamen Regelkarte in besonderer Weise Berücksichtigung finden können. Gleiches kann für signifikantere und/oder zuverlässigere Informationen gelten.

Unter komplementären Informationen werden insbesondere Informationen verstanden, welche unverändert in eine einzige Regelkarte übernommen werden können, ohne dass sich dadurch eine Kollisionsgefahr von Fahrzeugen, welche diese Regelkarte befolgen, erhöht. Beispielsweise kann es sich bei Vorfahrt für eine Straße und Vorfahrt gewähren für eine Querstraße und komplementäre Verkehrsregeln und damit um komplementäre Informationen handeln.

Gemäß einer Ausführung ist vorgesehen, dass bei Durchführung des Abstimmungsschritts einer oder mehrere der folgenden Schritte ausgeführt werden, beispielsweise iterativ ausgeführt werden:
- Bewerten einer Signifikanz und/oder Konfidenz von Informationen mit Schwellenwerten oder Wahrscheinlichkeiten, beispielsweise von Gefahrsituation oder Fahrmodus wie selbstfahrend oder automatisch fahrend eines jeweiligen Fahrzeugs,
- Plausibilisieren, beispielsweise technisch oder statis-
- Zusammentragen von Informationen, insbesondere aller verfügbarer Informationen,
- Fusionieren, insbesondere Erstellen eines neuen, beispielsweise erweiterten, insbesondere räumlich erweiterten und/oder präzisierten Bilds, das insbesondere inhaltlich stimmig ist.

Unter einem Bild kann beispielsweise eine Regelkarte verstanden werden. Es kann darunter auch eine anders repräsentierte Beurteilung einer Verkehrslage oder einer Straßentopologie verstanden werden. Inhaltlich stimmig ist ein Bild insbesondere dann, wenn jeweilige Verkehrsregeln zueinander korrespondieren, so dass sich die Kollisionswahrscheinlichkeit bei Beachtung der Verkehrsregeln beziehungsweise einer daraus erzeugten Regelkarte nicht erhöht und/oder minimal ist.

Es sei verstanden, dass der Abstimmungsschritt sowohl ausschließlich von dem zentralen Server wie auch in Kooperation zwischen dem Server und einer Anzahl von Fahrzeugen ausgeführt werden kann. Das Verfahren ist somit, insbesondere in diesem Fall, nicht auf die Ausführung in einem Server eingeschränkt. Es kann sich hier also beispielsweise auch um ein Verfahren handeln, welches über den Server und über eine Anzahl von Fahrzeugen verteilt ausgeführt wird.

Gemäß einer Ausführung ist vorgesehen, dass das Verfahren ferner folgenden Schritt aufweist:
- Abspeichern der in dem Abstimmungsschritt erstellten Regelkarte in einer Datenbank.

Damit kann eine erzeugte Regelkarte für spätere Verwendungen abgespeichert werden. Beispielsweise kann diese Regelkarte neu aufgestellte Verkehrszeichen oder eine geänderte Kreuzungs-Datenbank gespeicherten Regelkarte nicht berücksichtigt waren. Es sei verstanden dass es auch möglich ist, eine Regelkarte von einem Fahrzeug zu empfangen und unverändert in der Datenbank zu speichern, vorzugsweise nach geeigneter Überprüfung.

Gemäß einer Ausführung ist vorgesehen, dass das Verfahren bei Durchführung des Abstimmungsschritts ferner einen Schritt des Erkennens einer Blockade aufweist.

Unter einer Blockade wird dabei insbesondere eine Situation verstanden, bei welcher mehrere Fahrzeuge derart aufeinander zu fahren oder derart angeordnet sind, dass eine eindeutige Vorfahrtsregelung nicht möglich ist. Dies kann beispielsweise der Fall sein, wenn vier Fahrzeuge aus unterschiedlichen Richtungen auf eine Kreuzung zu fahren, an welcher lediglich rechts-vor-links gilt, und gleichzeitig an der Kreuzung eintreffen.

Gemäß einer Ausführung ist vorgesehen, dass im Fall einer Blockade eine Regelkarte erstellt wird,
- welche einen möglichst gut fließenden Verkehr ermöglicht,
- bei welchem Fahrzeuge ohne Möglichkeit zur Teilnahme an dem Verfahren, insbesondere Fahrzeuge ohne Fahrzeug-zu-X-Kommunikationstechnik, priorisiert durchgelassen werden, und/oder
- bei welcher, insbesondere im Fall einer Pattsituation, Prioritäten anhand einem oder mehreren der folgenden Parameter Fahrzeugen zugewiesen werden:
   - Fahrgeschwindigkeit,
   - festes Regelwerk,
   - Fahrtrichtung, beispielsweise Himmelsrichtung,
   - Zählerstand jeweiliger Vorfahrtszähler,
   - Navigationsinformationen,
   - Informationen über aktivierte Komponenten wie ein Navigationssystem,
   - Informationen über gesetzte Blinker,
   - Informationen über automatische Lenkung,
   - Informationen über Nachgeben,
   - Fahrtziel,
   - geplante Trajektorie,
   - Sondereinsatzrechte oder Vorliegen besonderer Vorrechtsmerkmale;
   oder
- wobei im Fall einer Blockade der Abstimmungsschritt abgebrochen wird.

Unter einer Pattsituation wird dabei insbesondere eine Situation verstanden, in welcher keines der Fahrzeuge a priori bevorrechtigt ist. Unter einem Nachgeben wird insbesondere verstanden, dass ein Fahrzeug von sich aus auf eine eventuell mögliche Vorfahrt verzichtet, wobei dieses Nachgeben bevorzugt den anderen beteiligten Fahrzeugen und/oder dem zentralen Server mitgeteilt wird.

Durch ein Nachgeben eines Fahrzeugs kann die Regelungskomplexität deutlich gesenkt werden, da ein Fahrzeug, welches nachgibt, zumindest zu einer eindeutigen und unmittelbar eintragbaren Verkehrsregel Vorfahrt gewähren führt. Es ist insbesondere möglich, dass ein am Abstimmungsschritt beteiligtes Fahrzeug überprüft, ob ein Nachgeben angebracht ist, und das Nachgeben dem zentralen Server mitteilt.

Sondereinsatzrechte können tatsächlich in Anspruch genommene besondere Rechte sein, beispielsweise eine Geschwindigkeits-übertretung bei einer Einsatzfahrt eines Krankenwagens oder Feuerwehrfahrzeugs. Vorrechtsmerkmale können unabhängig spielsweise wenn sich ein Krankenwagen gerade nicht auf einer Einsatzfahrt befindet und sich an die Verkehrsregeln hält.

Gemäß einer Ausführung ist vorgesehen, dass
- bei Durchführung des Abstimmungsschritts eine zufällige Zuteilung von Prioritäten zu den beteiligten Fahrzeugen erfolgt,
- wobei ein Fahrzeug mit höherer Priorität Vorrecht vor Fahrzeugen mit niedrigerer Priorität hat.

Dies ermöglicht bei Fehlen von anderen Anhaltspunkten für Prioritäten eine pragmatische, einfache und im Mittel gerechte Zuteilung der Prioritäten zu den einzelnen Fahrzeugen. Vorrechte beziehungsweise Prioritäten sollen dabei vorzugsweise korrespondieren, was insbesondere bedeuten kann, dass die jeweiligen Vorrechte oder Prioritäten beziehungsweise daraus abgeleitete Verkehrsregeln zu einem möglichst geringen Unfallrisiko führen.

Es ist auch möglich, Fahrzeugen, welche nicht mit einer Technik zur Kommunikation mit dem zentralen Server ausgestattet sind und/oder welche ansonsten nicht zur Teilnahme an dem Verfahren in der Lage sind, jeweils Vorrechte zu gewähren. Außerdem können Fahrzeugen mit Sondereinsatzrechten oder sonstigen Vorrechtsmerkmalen Vorrechte gewährt werden, beispielsweise Krankenwagen oder Feuerwehrfahrzeugen.

Gemäß einer Ausführung ist vorgesehen, dass das Verfahren in dem Fall, dass während des Abstimmungsschritts ein Abbruchkriterium erfüllt wird, einen Schritt des Abbrechens des Abstimmungsschritts aufweist.

Dies ermöglicht eine Reaktion auf eine besonders schwierige ergebnisloser Abstimmungsschritt vermieden werden kann. Insbesondere kann beispielsweise vermieden werden, dass der Abstimmungsschritt zu viel Zeit in Anspruch nimmt, um noch für eine sichere Regelung der Verkehrssituation vor Eintreffen der Fahrzeuge an der kritischen Stelle zu sorgen. Bei einem Abbrechen des Abstimmungsschritts können beispielsweise Fahrmanöver abgebrochen werden, es kann eine Übergabe an die jeweiligen Fahrer stattfinden, oder es können andere geeignete, insbesondere eine Kollision vermeidende Maßnahmen ergriffen werden. Der Abbruch kann insbesondere von dem zentralen Server den beteiligten Fahrzeugen mitgeteilt werden.

Gemäß einer Ausführung ist vorgesehen, dass Regelkarten über eine Funkverbindung, insbesondere in einer Fahrzeug-zu-X-Nachricht, von Fahrzeugen empfangen oder an Fahrzeuge gesendet werden.

Dies ermöglicht insbesondere einen direkten Austausch von Regelkarten oder Bestätigungen zwischen den beteiligten Fahrzeugen und dem Server, gemäß einer Ausführung ohne Zwischenschaltung eines Mobilfunknetzes.

Gemäß einer Ausführung ist vorgesehen, dass das Verfahren ferner folgenden Schritt aufweist:
- Abspeichern einer in einem Abstimmungsschritt erstellten, von einem Fahrzeug empfangenen oder von einem Benutzer eingegebenen Regelkarte in einer Datenbank.

Die ermöglicht es, eine erstellte, empfangene oder auch von einem Benutzer eingegebene Regelkarte zum Aktualisieren der Datenbank zu verwenden. Insbesondere kann damit ein Benutzer, welcher beispielsweise von der Änderung von Verkehrsregeln erfährt, zugehörige Regelkarten manuell aktualisieren, so dass die neuen Verkehrsregeln sofort zum Senden an Fahrzeuge zur Verfügung Gemäß einer Ausführung ist vorgesehen, dass
- die Regelkarte vor dem Abspeichern in der Datenbank ausgewertet wird, insbesondere anhand von Zuverlässigkeitsinformationen plausibilisiert wird,
- und die Regelkarte nur dann in der Datenbank abgespeichert wird, wenn die Auswertung anzeigt, dass die Regelkarte abgespeichert werden soll.

Dies vermeidet das Abspeichern einer fehlerhaften Regelkarte. Beispielsweise kann dabei auf die andernorts erwähnten Kriterien zurückgegriffen werden.

Die Erfindung betrifft des Weiteren ein Verfahren zum Handhaben einer Verkehrsregeln enthaltenden Regelkarte in einem Fahrzeug, welches folgenden Schritt aufweist:
- Empfangen einer Regelkarte von einem zentralen Server.

Damit kann ein Fahrzeug eine Regelkarte von einem zentralen Server empfangen und insbesondere unmittelbar verwenden, beispielsweise zur Anzeige an den Fahrer, zur Verwendung in einem System zum autonomen Fahren oder in einem Assistenzsystem. Gemäß einer Ausführung kann auf eine eigene Erfassung von Verkehrsregeln durch das Fahrzeug verzichtet werden, so dass es sich ausschließlich auf die empfangene Regelkarte verlässt. Die empfangene Regelkarte kann jedoch auch mit selbst erfassten Verkehrsregeln abgeglichen werden, wobei etwaige Unstimmigkeiten beispielsweise an den zentralen Server gemeldet werden können.

Gemäß einer Ausführung ist vorgesehen, dass das Verfahren ferner vor dem Schritt des Empfangens einen Schritt des Sendens einer Aufforderung zum Senden einer Regelkarte an den zentralen Server Damit kann das Fahrzeug beispielsweise eine Regelkarte anfordern, wenn es erkennt, dass es auf eine Kreuzung oder auf eine andere regelungsbedürftige Stelle zufährt. Es kann auch eine Regelkarte anfordern, wenn es beispielsweise hinter einem langsam fahrenden Fahrzeug fährt und wissen möchte, ob ein temporäres Überholverbot besteht, welches einem Überholvorgang entgegensteht. Auch andere Verkehrsregeln können auf diese Weise abgefragt werden.

Die Erfindung betrifft des Weiteren ein Verfahren zum Handhaben einer Verkehrsregeln enthaltenden Regelkarte in einem Fahrzeug, welches folgende Schritte aufweist:
- Erkennen eines Umgebungszustands mittels einer Anzahl von Umfeldsensoren,
- Ableiten einer Anzahl von Verkehrsregeln basierend auf dem Umgebungszustand,
- Erzeugen der Regelkarte basierend zumindest auf den Verkehrsregeln, und
- Senden der Regelkarte an einen zentralen Server.

Mittels dieses Verfahrens kann eine Verkehrsregel in einem Fahrzeug erfasst und ansprechend darauf eine Regelkarte erstellt und an den zentralen Server übermittelt werden. Damit können beispielsweise die weiter oben genannten Funktionalitäten zum Ausführen eines Abgleichschritts oder zum Aktualisieren einer Datenbank ausgeführt werden. Es kann beispielsweise als Verkehrsregel auch ein temporäres Überholverbot abgeleitet werden, wenn ein Fahrzeug erkennt, dass Gegenverkehr einem Überholvorgang nachfolgender Fahrzeuge entgegensteht.

Unter einem Umgebungszustand kann beispielsweise eine Kreuzung, eine Anzahl von Verkehrsschildern, eine Anzahl von Lichtzeichen, eine Einmündung und/oder eine Straße verstanden werden. Es kann darunter auch eine bestimmte Situation verstanden werden, welche regelungsbedürftig erscheint, beispielsweise wenn ein langsam fahrendes Fahrzeug Gegenverkehr erkennt, welcher einem Überholvorgang nachfolgender Fahrzeuge entgegensteht.

Bei den Umfeldsensoren kann es sich beispielsweise um eine Anzahl von Kameras handeln. Es kann sich jedoch auch um andere Umfeldsensoren, beispielsweise um Ultraschallsensoren, Radargeräte, Fahrzeug-zu-X-Kommunikationsmittel oder um Mobilfunkkommunikationsmittel handeln. Mittels einer Kamera können beispielsweise Kreuzungstopologien, Verkehrszeichen, Einmündungen oder entgegenkommende Fahrzeuge erkannt werden.

Verkehrsregeln können beispielsweise anhand von erkannten Verkehrszeichen oder Kreuzungstopologien erkannt werden. Aus einem erkannten Verkehrszeichen, beispielsweise Vorfahrt, Vorfahrt gewähren oder STOP, kann typischerweise unmittelbar die entsprechende Verkehrsregel abgeleitet werden. Aus einer erkannten Kreuzungstopologie ohne erkannte Verkehrszeichen kann als Grundregel rechts-vor-links abgeleitet werden, wobei anhand anderer erkannter Fahrzeuge eine Verkehrsregel für das eigene Fahrzeug abgeleitet werden kann. Aus einer erkannten Einmündung oder Auffahrt kann unter Berücksichtigung lokaler Gesetze und Regelungen eine Vorfahrtsregel abgeleitet werden. Aus erkannten entgegenkommenden Fahrzeugen kann ein Überholverbot für nachfolgende Fahrzeuge abgeleitet werden.

Die Regelkarte wird typischerweise dadurch erzeugt, dass zunächst die unmittelbar abgeleiteten Regeln, beispielsweise aufgrund eines erkannten Vorfahrtsschilds, in die Regelkarte geschrieben werden und anschließend dazu zwingend korrespondierende Verkehrsregeln in die Regelkarte geschrieben werden. Vorfahrt gewähren des Querverkehrs korrespondieren, da ansonsten ein Unfall drohen würde. Zu einer Vorfahrt eines auf einer Autobahn durchfahrenden Fahrzeugs kann ein Vorfahrt gewähren eines einmündenden Fahrzeugs korrespondieren.

Durch das Senden der Regelkarte an die externe Einheit kann insbesondere eine Überprüfung durchgeführt werden, ob die Regelkarte zu anderen Regelkarten korrespondiert beziehungsweise zusammen mit anderen Regelkarten ein stimmiges Bild ergibt. Darunter wird insbesondere verstanden, dass die Regelkarten Verkehrsregeln enthalten, welche ein möglichst geringes Unfallrisiko ergeben.

Gemäß einer Ausführung ist vorgesehen, dass das Verfahren ferner nach dem Schritt des Sendens einen Schritt des Empfangens einer Regelkarte von dem zentralen Server aufweist.

Damit kann das Fahrzeug insbesondere eine Regelkarte erhalten, wenn die von ihm selbst an den zentralen Server gesendete Regelkarte beispielsweise in einem Abstimmungsschritt, insbesondere wie andernorts erläutert, verändert wurde oder für unstimmig oder nicht aktuell befunden wurde. Das Fahrzeug hält sich dann vorzugsweise an die empfangene Regelkarte.

Gemäß einer Ausführung ist vorgesehen, dass das Verfahren ansprechend darauf ausgeführt wird, dass eine Annäherung an eine Kreuzung oder Einmündung erkannt wird, wobei die Annäherung bevorzugt mittels Umfeldsensoren, insbesondere mittels einer Kamera, mittels Satellitennavigation, mittels einer elektronischen Straßenkarte und/oder mittels Fahrzeug-zu-X-Kommunikation erkannt wird.

Dies ermöglicht eine Durchführung des Verfahrens in einer solchen insbesondere auch der Fall sein, wenn eine Annäherung mehrerer Fahrzeuge stattfindet und/oder erkannt wird. Unter einer Einmündung kann insbesondere auch eine Auffahrt auf eine Autobahn verstanden werden. Unter einer Kreuzung kann auch ein Kreisverkehr oder eine andere Verzweigung oder Zusammenführung von Straßen verstanden werden.

Gemäß einer Ausführung ist vorgesehen, dass in der Regelkarte enthaltene Verkehrsregeln der Kreuzung oder Einmündung zugeordnet sind, insbesondere Vorfahrt und Vorfahrt gewähren.

Die Regelkarte kann jedoch auch Überholverbote oder andere Verkehrsregeln wie Parkverbote oder Geschwindigkeitsbegrenzungen enthalten. Auf diese Weise ist es insbesondere auch möglich, Verkehrsregeln zentral zu verwalten und an Fahrzeuge zu verteilen.

Gemäß einer Ausführung ist vorgesehen, dass der zentrale Server mittels eines erfindungsgemäßen Verfahrens betrieben wird. Dabei kann auf alle genannten Ausführungen und Varianten zurückgegriffen werden. Erläuterte Vorteile gelten entsprechend.

Gemäß einer Ausführung ist vorgesehen, dass eine jeweilige Regelkarte oder auch eine Bestätigung oder andere Nachricht über eine Funkverbindung, insbesondere in einer Fahrzeug-zu-X-Nachricht, zwischen einem Fahrzeug und dem zentralen Server oder zwischen unterschiedlichen Fahrzeugen übermittelt wird.

Hierunter werden beispielsweise Techniken verstanden, welche eine direkte Kommunikation zwischen Fahrzeugen ermöglichen, ohne auf die Vermittlung durch ein Mobilfunknetz oder eine andere externe Infrastruktur angewiesen zu sein. Es können hierunter Infrastruktureinrichtungen wie beispielsweise dem zentralen Server verstanden werden.

Gemäß einer Ausführung ist vorgesehen, dass zusammen mit einer jeweiligen Regelkarte eines oder mehrere der folgenden Elemente gesendet oder empfangen werden:
- ein Kennzeichen eines die Regelkarte sendenden Fahrzeugs,
- eine Identifikation eines die Regelkarte sendenden Fahrzeugs,
- eine Kreuzungstopologie,
- Objekteigenschaften, insbesondere Art, Position und/oder Trajektorie, eines die Regelkarte sendenden Fahrzeugs,
- Informationen über eine Zuverlässigkeit der Regelkarte und/oder über eine Zuverlässigkeit von Umfeldsensoren, insbesondere einer Kamera,
- Informationen über Fahrzeuge, welche nicht mit einer Technik zum Teilnehmen am Abstimmen von Verkehrsregeln ausgestattet sind, insbesondere welche nicht mit einer Fahrzeug-zu-X-Kommunikationstechnik ausgestattet sind, und insbesondere einschließlich deren Kennzeichen,
- ein Zuverlässigkeitsmaß.

Derartige Informationen können die Auswertung der Regelkarte bei einer empfangenden Einheit verbessern und/oder erleichtern. Ein Zuverlässigkeitsmaß kann sich beispielsweise auf die Qualität von Sensoren des sendenden Fahrzeugs beziehen und somit anzeigend dafür sein, wie zuverlässig die Regelkarte ist, beispielsweise ob damit zu rechnen ist, dass Verkehrszeichen oder Kreuzungstopologien tatsächlich richtig erkannt wurden.

Gemäß einer Ausführung ist vorgesehen, dass die Regelkarte, eine weitere Regelkarte, die erste Regelkarte, die zweite Regelkarte und/oder die zu sendende Regelkarte
- einem Kreisverkehr
- einer Einmündung, insbesondere auf eine Autobahn,
- einer Engstelle,
- einer Haltestelle
   und/oder
- einer Straße, insbesondere einer Straße mit Überholmöglichkeit,
   zugeordnet ist.

An derartigen Stellen treten häufig regelungsbedürftige Situationen auf, welche sich vorteilhaft mit dem erfindungsgemäßen Verfahren regeln lassen.

Es sei verstanden, dass sich die Erfindung auch auf eine Vorrichtung zur Durchführung eines erfindungsgemäßen Verfahrens bezieht. Eine solche Vorrichtung kann beispielsweise eine elektronische Steuerungseinrichtung sein, welche Prozessormittel und Speichermittel aufweist, wobei in den Speichermitteln Programmcode gespeichert ist, bei dessen Ausführung das erfindungsgemäße Verfahren ausgeführt wird. Eine solche Steuerungseinrichtung kann beispielsweise auch in eine andere Einrichtung integriert sein, beispielsweise in eine Steuerungseinrichtung für automatisiertes Fahren oder für Fahrassistenzsysteme. Sie kann auch als Server ausgeführt sein, welcher beispielsweise an einem zentralen Ort steht oder als Road-Side Unit in der Nähe einer Straße angeordnet ist. Ein solcher Server ist insbesondere dazu ausgebildet, mit Fahrzeugen zu kommunizieren, beispielsweise über Fahrzeug-zu-X-Kommunikation oder über ein Mobilfunknetz. Die Erfindung betrifft des Weiteren ein nichtflüchtiges computerlesbares Speichermedium, auf welchem Programmcode enthalten ist, bei dessen Ausführung durch einen Prozessor ein erfindungsgemäßes Verfahren ausgeführt wird. Es sei verstanden, dass dabei grundsätzlich auf alle beschriebenen Ausführungen und Varianten des erfindungsgemäßen Verfahrens zurückgegriffen werden kann.

Außerdem betrifft die Erfindung ein System aus einer Anzahl von Fahrzeugen, wobei jedes Fahrzeug dazu ausgebildet ist, ein erfindungsgemäßes Verfahren auszuführen, und wobei die Fahrzeuge dazu ausgebildet sind, miteinander zu kommunizieren, insbesondere zur Durchführung des erfindungsgemäßen Verfahrens und insbesondere unter Verwendung von Fahrzeug-zu-X-Kommunikation. Das System kann auch einen zentralen Server aufweisen, welcher zur Ausführung des Verfahrens ausgebildet ist. Der zentrale Server und die Fahrzeuge des Systems können insbesondere dazu ausgebildet sein, miteinander zu kommunizieren, und zwar insbesondere unter Verwendung von Fahrzeug-zu-X-Kommunikation. Hinsichtlich des erfindungsgemäßen Verfahrens kann dabei auf alle beschriebenen Ausführungen und Varianten zurückgegriffen werden.

Weitere Merkmale und Vorteile der Erfindung wird der Fachmann den nachfolgend mit Bezug auf die beigefügte Zeichnung beschriebenen Ausführungsbeispielen entnehmen. Dabei zeigen:
Fig. 1: Eine zu regelnde Situation an einer Kreuzung,
Fig. 2: Eine zu regelnde Situation auf einer Straße.

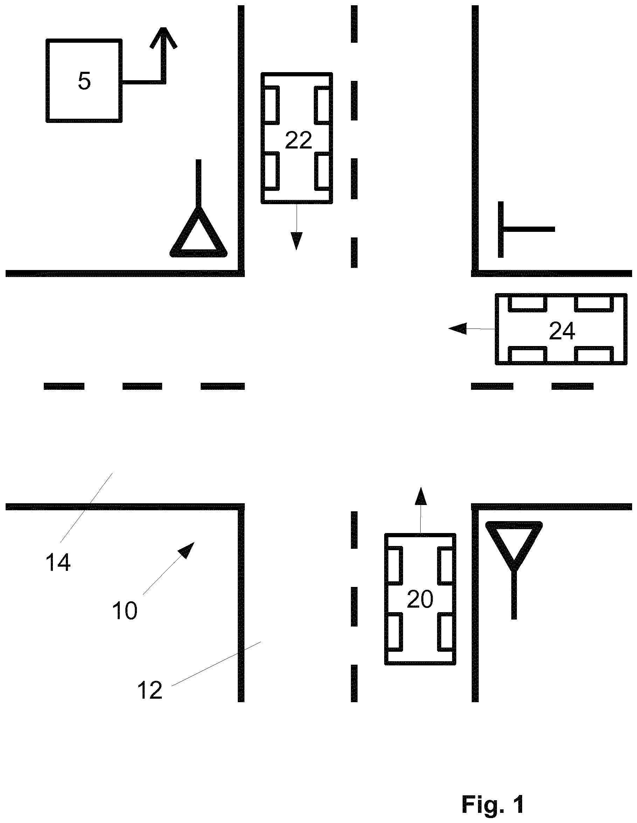

Fig. 1 zeigt eine Kreuzung 10, an welcher sich eine erste Straße 12 und eine zweite Straße 14 im rechten Winkel kreuzen. An einer entfernten Position steht ein zentraler Server 5, welcher dazu ausgebildet ist, mit Fahrzeugen zu kommunizieren. Dies ist hier lediglich schematisch durch eine angedeutete Antenne gezeigt.

Auf der ersten Straße 12 fährt ein erstes Fahrzeug 20 auf die Kreuzung 10 zu. Diesem kommt auf der anderen Seite der Kreuzung die Kreuzung 10 zu fährt. Auf der zweiten Straße 14 fährt quer hierzu ein drittes Fahrzeug 24, welches sich ebenfalls der Kreuzung 10 nähert. Die Fahrzeuge 20, 22, 24 sind jeweils lediglich schematisch dargestellt. Jeweilige Pfeile geben die Fahrtrichtungen an.

In der Situation, welche in Fig. 1 dargestellt ist, würde eine ungeregelte Weiterfahrt aller Fahrzeuge 20, 22, 24 zu einer Kollision führen. Aus diesem Grund gibt es Vorfahrtsregeln, welche die Priorität der Fahrzeuge 20, 22, 24 festlegen. Diese sind vorliegend mittels Verkehrszeichen angegeben, wobei das erste Fahrzeug 20 und das zweite Fahrzeug 22 jeweils ein Schild vor sich haben, welches Vorfahrt gewähren anzeigt, wohingegen das dritte Fahrzeug 24 ein Vorfahrtsschild vor sich hat. Aus dieser Regelung folgt grundsätzlich, dass das erste Fahrzeug 20 und das zweite Fahrzeug 22 zunächst warten müssen, bis das dritte Fahrzeug 24 vorbeigefahren ist. Anschließend können das erste Fahrzeug 20 und das zweite Fahrzeug 22 unmittelbar weiterfahren, da sich ihre jeweiligen Fahrtstrecken nicht kreuzen.

Vorliegend wird davon ausgegangen, dass das erste Fahrzeug 20 als erstes die zu regelnde Verkehrssituation erkennt, da es mittels Satellitennavigation und elektronischer Straßenkarte feststellt, dass es auf eine Kreuzung zu fährt und überdies mittels einer Kamera erkennt, dass sich auch andere Fahrzeuge der Kreuzung nähern. Mittels der Kamera erfasst das erste Fahrzeug 20 auch das Verkehrsschild "Vorfahrt gewähren", woraus das erste Fahrzeug 20 ableitet, dass es nicht bevorrechtigt ist.

Daraus leitet das erste Fahrzeug dann eine Regelkarte ab, welche der Kreuzung 10 zugehörig ist. In der Regelkarte wird für das erste Fahrzeug 20 die Verkehrsregel "Vorfahrt gewähren" eingetragen. Da in einem solchen Fall mangels Hinweisen auf eine richtung der gleichen Verkehrsregelung unterworfen ist, wird auch für das zweite Fahrzeug die Verkehrsregel "Vorfahrt gewähren" eingetragen. Ebenso ist bekannt, dass bei derartigen Kreuzungen der Querverkehr Vorfahrt hat, wenn ein bestimmtes Fahrzeug die Vorfahrt gewähren muss. Deshalb wird für das dritte Fahrzeug 24 und auch für die dazu entgegengesetzte Richtung die Verkehrsregel "Vorfahrt" eingetragen.

Die erzeugte Regelkarte, welche die eben erwähnten Verkehrsregeln in einem bestimmten, allgemein bekannten Format enthält, wird anschließen von dem ersten Fahrzeug 20 über Fahrzeug-zu-X-Kommunikationsmittel ausgesendet und von dem zentralen Server 5 empfangen.

Die anderen Fahrzeuge 22, 24 erstellen ebenfalls mit Hilfe jeweiliger Kameras eigene Regelkarten in gleicher Art und Weise wie eben beschrieben. Diese Regelkarten werden ebenfalls an den zentralen Server 5 gesendet. Dort werden sie mit der von dem ersten Fahrzeug 20 erstellten Regelkarte verglichen. Stimmen die Regelkarten überein, so sendet der zentrale Server 5 eine Bestätigung an die Fahrzeuge 20, 22, 24, dass die Regelkarten übereinstimmen und somit für alle Fahrzeuge 20, 22, 24 ein gefahrloses Passieren der Kreuzung 10 unter Verwendung identischer Regelkarten möglich ist. Die in der gemeinsamen Regelkarte enthaltenen Verkehrsregeln werden den jeweiligen Fahrern der Fahrzeuge 20, 22, 24 zur Beachtung angezeigt.

Sollten die Regelkarten nicht übereinstimmen, beispielsweise weil eines der Fahrzeuge 20, 22, 24 ein Verkehrszeichen aufgrund Bedeckung mit Schnee nicht richtig identifiziert hat, so wird ein Abstimmungsschritt ausgelöst, welcher vom zentralen Server 5 ausgeführt wird.

Dabei werden die Regelkarten vom zentralen Server 5 bewertet. Insbesondere werden dabei jeweils Informationen ausgewertet, welche die Zuverlässigkeit der jeweiligen Kamera, mit welcher die Regelkarte erstellt wurde, betreffen. Außerdem wird beachtet, dass eine Verkehrsregel umso zuverlässiger ist, je mehr Fahrzeuge sie unabhängig voneinander ermittelt haben. Der Vorgang wird dabei iterativ ausgeführt

Wenn der zentrale Server 5 innerhalb einer vorgegebenen Höchstzahl von Iterationsschritten zu einer gemeinsamen Regelkarte gelangt, so wird diese Regelkarte an die Fahrzeuge 20, 24, 26 gesendet und von diesen beachtet. Damit ist nun ebenfalls ein gefahrloses Passieren der Kreuzung 10 möglich, wobei die in der gemeinsamen Regelkarte enthaltenen Verkehrsregeln den jeweiligen Fahrern angezeigt werden. Sollte der Server nicht innerhalb einer vorgegebenen Höchstzahl von Iterationsschritten zu einer fusionierten Regelkarte gelangen, so wird der Abstimmungsschritt abgebrochen und dies den Fahrzeugen 20, 22, 24 mitgeteilt. In diesem Fall wird den jeweiligen Fahrern der Fahrzeuge 20, 22, 24 ein Signal gegeben, welches sie zur eigenen Beurteilung der Verkehrslage auffordert.

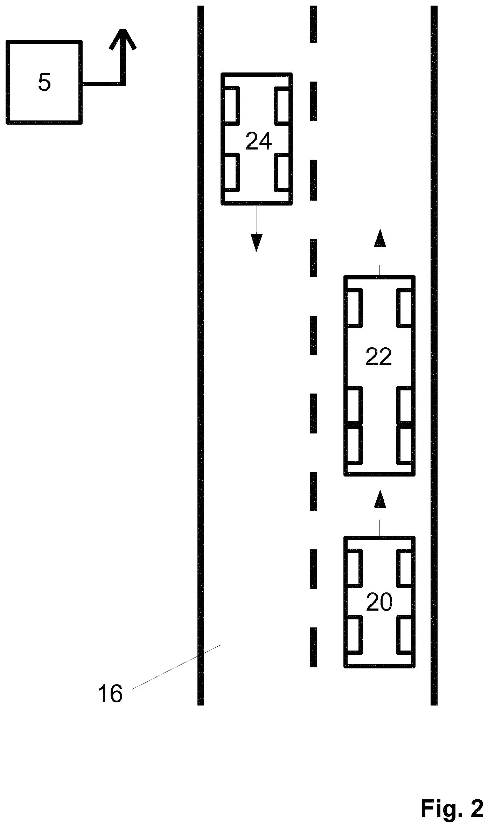

Fig. 2 zeigt eine einspurige Straße 16, auf welcher in beiden Richtungen Fahrzeuge fahren. Dabei handelt es sich um ein erstes Fahrzeug 20, welches einem zweiten Fahrzeug 22 folgt, sowie um ein entgegenkommendes drittes Fahrzeug 24. Das zweite Fahrzeug 22 ist dabei ein langsam fahrender Lastkraftwagen. Deshalb besteht für das erste Fahrzeug 20 eine Veranlassung dazu, das zweite Fahrzeug 22 zu überholen. Ebenso wie bei Fig. 1 ist ein entfernter zentraler Server 5 vorhanden.

Das zweite Fahrzeug 22 ist als kommerzielles Fahrzeug mit besseren Sensoren, insbesondere einer besseren Kamera als die ein besseres Sichtfeld auf die Straße 16 als das nachfolgende erste Fahrzeug 20. Deshalb sendet das zweite Fahrzeug 22 eine Information an das erste Fahrzeug 20, in welcher es anzeigt, dass es bei der Durchführung eines Überholvorgangs behilflich sein kann. Diese Information wird zunächst an den zentralen Server 5 gesendet, welcher sie an das erste Fahrzeug 20 weiterleitet.

Wenn der Fahrer des ersten Fahrzeugs 20 einen Überholvorgang durchführen möchte, betätigt er einen in dem ersten Fahrzeug 20 vorhandenen Knopf. Daraufhin wird die Überholabsicht in einer Nachricht an den zentralen Server 5 und von dort weiter an das zweite Fahrzeug 22 gesendet. Dieses erfasst dann mit seiner Kamera die vor ihm befindliche Umgebungssituation und erkennt dabei das entgegenkommende dritte Fahrzeug 24, welches ersichtlich einem Überholvorgang des ersten Fahrzeugs 20 entgegensteht. Das zweite Fahrzeug 22 erstellt daraufhin eine Regelkarte, welche für die Straße 16 ein temporäres Überholverbot enthält. Diese Regelkarte sendet das zweite Fahrzeug 22 an den Server 5, welcher sie an das erste Fahrzeug 20 weiterleitet. Dieses erhält die Regelkarte und ermittelt aufgrund des temporären Überholverbots, dass ein Überholvorgang derzeit nicht möglich ist. Dies wird dem Fahrer des ersten Fahrzeugs 20 angezeigt, so dass dieser dazu aufgefordert wird, den geplanten Überholvorgang zu unterlassen. Eine Kollision mit dem dritten Fahrzeug 24 wird auf diese Weise wirkungsvoll vermieden.

Die von dem zweiten Fahrzeug 22 an den Server 5 gesendete Regelkarte bleibt in diesem zunächst gespeichert und steht auch anderen Fahrzeugen zur Verfügung. Dies kann beispielsweise relevant sein, wenn das erste Fahrzeug 20 ohne zu überholen von der Straße 16 abbiegt und ein weiteres Fahrzeug auf das langsame zweite Fahrzeug 20 auffährt. Wenn das zweite Fahrzeug 22 erkennt, dass einem Überholvorgang nichts mehr entgegensteht, so kann es dies dem zentralen Server 5 mitteilen, welcher daraufhin die Regelkarte löscht oder entsprechend aktualisiert.
Es sei verstanden, dass die hier gezeigten Ausführungsbeispiele lediglich schematisch zu verstehen sind. Aus Gründen der Vereinfachung wird bei den unten stehenden Ansprüchen auf die Einfügung der Bezugszeichen verzichtet. Es wird davon ausgegangen, dass eine Zuordnung von Bezeichnungen der Ansprüche zu den Ausführungsbeispielen problemlos möglich ist.

Allgemein sei darauf hingewiesen, dass unter Fahrzeug-zu-X-Kommunikation insbesondere eine direkte Kommunikation zwischen Fahrzeugen und/oder zwischen Fahrzeugen und Infrastruktureinrichtungen verstanden wird. Beispielsweise kann es sich also um Fahrzeug-zu-Fahrzeug-Kommunikation oder um Fahrzeug-zu-Infrastruktur-Kommunikation handeln. Sofern im Rahmen dieser Anmeldung auf eine Kommunikation zwischen Fahrzeugen Bezug genommen wird, so kann diese grundsätzlich beispielsweise im Rahmen einer Fahrzeug-zu-Fahrzeug-Kommunikation erfolgen, welche typischerweise ohne Vermittlung durch ein Mobilfunknetz oder eine ähnliche externe Infrastruktur erfolgt und welche deshalb von anderen Lösungen, welche beispielsweise auf ein Mobilfunknetz aufbauen, abzugrenzen ist. Beispielsweise kann eine Fahrzeug-zu-X-Kommunikation unter Verwendung der Standards IEEE 802.11p oder IEEE1609.4 erfolgen. Eine Fahrzeug-zu-X-Kommunikation kann auch als C2X-Kommunikation bezeichnet werden. Die Teilbereiche können als C2C (Car-to-Car) oder C2I (Car-to-Infrastructure) bezeichnet werden.

Es sei verstanden, dass ein erfindungsgemäßes Verfahren beispielsweise auch von Fahrzeugen oder unter Einbeziehung von Fahrzeugen ausgeführt werden kann, welche keine Umfeldsensoren wie beispielsweise Kameras, RADAR oder LIDAR aufweisen. Bei-spielsweise können derartige Fahrzeuge auf eine Kreuzung oder eine andere regelungsbedürftige Stelle zufahren, auf welche auch andere Fahrzeuge zufahren, welche Umfeldsensoren haben. Fahrzeuge ohne Umfeldsensoren können dann zwar typischerweise keine Regelkarte erzeugen, können jedoch trotzdem an einem Abstimmungsvorgang oder Abstimmschritt teilnehmen und dazu beitragen, zu einer gemeinsam akzeptierten und/oder verwendeten Regelkarte zu gelangen.

Es sei darauf hingewiesen, dass ein erfindungsgemäßes Verfahren grundsätzlich für alle Arten von Fahrzeugen verwendet werden kann. Insbesondere kann es für frei lenkbare oder auch automatisch fahrende Kraftfahrzeuge wie beispielsweise Personenkraftwagen, Lastkraftwagen, Busse oder Einsatzfahrzeuge verwendet werden. Es kann jedoch auch für Schienenfahrzeuge, beispielsweise Straßenbahnen oder auch normale Züge verwendet werden. Auch eine Anwendung bei Fahrzeugen, welche mit menschlicher oder tierischer Muskelkraft betrieben werden oder bei Spezialfahrzeugen wie beispielsweise bei Fahrzeugen des innerbetrieblichen Werksverkehrs, beispielsweise Gabelstapler, ist möglich.

Ansprüche oder Merkmalskombinationen sind als von der Offenbarung dieser Anmeldung mit abgedeckt zu verstehen.

Es sei ferner darauf hingewiesen, dass Ausgestaltungen, Merkmale und Varianten der Erfindung, welche in den verschiedenen Ausführungen oder Ausführungsbeispielen beschriebenen und/oder in den Figuren gezeigt sind, beliebig untereinander kombinierbar sind. Einzelne oder mehrere Merkmale sind beliebig gegeneinander austauschbar. Hieraus entstehende Merkmalskombinationen sind als von der Offenbarung dieser Anmeldung mit abgedeckt zu verstehen.

Rückbezüge in abhängigen Ansprüchen sind nicht als ein Verzicht auf die Erzielung eines selbständigen, gegenständlichen Schutzes für die Merkmale der rückbezogenen Unteransprüche zu verstehen. Diese Merkmale können auch beliebig mit anderen Merkmalen kombiniert werden.

Merkmale, die lediglich in der Beschreibung offenbart sind oder Merkmale, welche in der Beschreibung oder in einem Anspruch nur in Verbindung mit anderen Merkmalen offenbart sind, können grundsätzlich von eigenständiger erfindungswesentlicher Bedeutung sein. Sie können deshalb auch einzeln zur Abgrenzung vom Stand der Technik in Ansprüche aufgenommen werden.

## Patentansprüche

1. Verfahren zum Betreiben eines zentralen Servers (5) sum Verwalten von Verkehrsregeln enthaltenden Regelkarten, wobei das Verfahren folgende Schritte aufweist:
- Erstellen einer zu sendenden Regelkarte in einem Abstimmungsschritt, wobei der Abstimmungsschritt ansprechend darauf ausgeführt wird, dass im zentralen Server bei einem Vergleich ermittelt wurde, dass zumindest eine erste Regelkarte und eine zweite Regelkarte nicht übereinstimmen,
- Senden der Regelkarte vom zentralen Server an ein Fahrzeug (20, 22, 24).

2. Verfahren nach Anspruch 1,
- wobei das Senden ansprechend auf einen Empfang einer Aufforderung zum Senden einer Regelkarte von einem Fahrzeug ausgeführt wird,
- wobei die Aufforderung vorzugsweise Informationen über die zu sendende Regelkarte enthält.

3. Verfahren nach einem der vorhergehenden Ansprüche,
- wobei das Senden ansprechend auf einen Empfang einer Regelkarte von einem Fahrzeug ausgeführt wird.

4. Verfahren nach einem der vorhergehenden Ansprüche,
- wobei die erste Regelkarte von einem Fahrzeug empfangen wurde, und
- die zweite Regelkarte von einem anderen Fahrzeug empfangen wurde oder aus einer Datenbank ausgelesen wurde.

5. Verfahren nach einem der vorhergehenden Ansprüche,
- wobei der Abstimmungsschritt zur Abstimmung zwischen einer Anzahl daran beteiligter Fahrzeuge durchgeführt wird,
- wobei die zu sendende Regelkarte vorzugsweise an alle beteiligten Fahrzeuge gesendet wird.

6. Verfahren nach einem der vorhergehenden Ansprüche,
- wobei an dem Abstimmungsschritt das Fahrzeug sowie andere Fahrzeuge beteiligt sind, welche sich einer Kreuzung oder Einmündung annähern oder welche auf der gleichen Straße fahren;
und/oder
- wobei an dem Abstimmungsschritt ausschließlich Fahrzeuge beteiligt sind, von welchen eine Kreuzung jeweiliger Trajektorien berechnet wurde.

7. Verfahren nach einem der vorhergehenden Ansprüche,
- wobei der Abstimmungsschritt durch Abgleich von Regelkarten und/oder Plausibilisierungsinformationen von daran beteiligten Fahrzeugen erfolgt.

8. Verfahren nach Anspruch 7,
- wobei ein Abgleich von Regelkarten und/oder Plausibilisierungsinformationen eine jeweilige Plausibilisierung beinhaltet,
- wobei eine Plausibilisierung vorzugsweise einen oder mehrere der folgenden Schritte aufweist:
- Bewertung und/oder Gewichtung vorliegender Informationen, insbesondere in Bezug auf Informationen beteiligter Fahrzeuge,
- Erfassen der Signifikanz und/oder Zuverlässigkeit von Informationen,
- Überprüfen, welche Fahrzeuge identische Informationen haben oder identische Informationen gesendet haben,
- Ergänzen von Informationen, wenn diese komplementär sind.

9. Verfahren nach einem der vorhergehenden Ansprüche,
- wobei bei Durchführung des Abstimmungsschritts einer oder mehrere der folgenden Schritte ausgeführt werden, beispielsweise iterativ ausgeführt werden:
- Bewerten einer Signifikanz und/oder Konfidenz von Informationen mit Schwellenwerten oder Wahrscheinlichkeiten, beispielsweise von Gefahrsituation oder Fahrmodus wie selbstfahrend oder automatisch fahrend eines jeweiligen Fahrzeugs,
- Plausibilisieren, beispielsweise technisch oder statistisch,
- Zusammentragen von Informationen, insbesondere aller verfügbarer Informationen,
- Fusionieren, insbesondere Erstellen eines neuen, beispielsweise erweiterten, insbesondere räumlich erweiterten und/oder präzisierten Bilds, das insbesondere inhaltlich stimmig ist.

10. Verfahren nach einem der vorhergehenden Ansprüche,
- welches bei Durchführung des Abstimmungsschritts ferner einen Schritt des Erkennens einer Blockade aufweist.

11. Verfahren nach Anspruch 10,
- wobei im Fall einer Blockade eine Regelkarte erstellt wird, welche einen möglichst gut fließenden Verkehr ermöglicht,
- bei welchem Fahrzeuge ohne Möglichkeit zur Teilnahme an dem Verfahren, insbesondere Fahrzeuge ohne Fahrzeug-zu-X-Kommunikationstechnik, priorisiert durchgelassen werden, und/oder
- bei welcher, insbesondere im Fall einer Pattsituation, Prioritäten anhand einem oder mehreren der folgenden Parameter Fahrzeugen zugewiesen werden:
- Fahrgeschwindigkeit,
- festes Regelwerk,
- Fahrtrichtung, beispielsweise Himmelsrichtung,
- Zählerstand jeweiliger Vorfahrtszähler,
- Navigationsinformationen,
- Informationen über aktivierte Komponenten wie ein Navigationssystem,
- Informationen über gesetzte Blinker,
- Informationen über automatische Lenkung,
- Informationen über Nachgeben,
- Fahrtziel,
- geplante Trajektorie,
- Sondereinsatzrechte oder Vorliegen besonderer Vorrechtsmerkmale;
oder
- wobei im Fall einer Blockade der Abstimmungsschritt abgebrochen wird.

12. Verfahren nach einem der vorhergehenden Ansprüche,
- wobei bei Durchführung des Abstimmungsschritts eine zufällige Zuteilung von Prioritäten zu den beteiligten Fahrzeugen erfolgt,
- wobei ein Fahrzeug mit höherer Priorität Vorrecht vor Fahrzeugen mit niedrigerer Priorität hat.

13. Verfahren nach einem der vorhergehenden Ansprüche,
- welches in dem Fall, dass während des Abstimmungsschritts ein Abbruchkriterium erfüllt wird, einen Schritt des Abbrechens des Abstimmungsschritts aufweist.

14. Verfahren nach einem der vorhergehenden Ansprüche,
- wobei Regelkarten über eine Funkverbindung, insbesondere in einer Fahrzeug-zu-X-Nachricht, von Fahrzeugen empfangen oder an Fahrzeuge gesendet werden.

15. Verfahren nach einem der vorhergehenden Ansprüche, welches ferner folgenden Schritt aufweist:
- Abspeichern einer in einem Abstimmungsschritt erstellten, von einem Fahrzeug empfangenen oder von einem Benutzer eingegebenen Regelkarte in einer Datenbank.

16. Verfahren nach Anspruch 15,
- wobei die Regelkarte vor dem Abspeichern in der Datenbank ausgewertet, insbesondere anhand von Zuverlässigkeitsinformationen plausibilisiert wird,
- und die Regelkarte nur dann in der Datenbank abgespeichert wird, wenn die Auswertung anzeigt, dass die Regelkarte abgespeichert werden soll.

17. Verfahren zum Handhaben einer Verkehrsregeln enthaltenden Regelkarte in einem Fahrzeug (20,22,24), welches folgende Schritte aufweist:
- Erkennen eines Umgebungszustands mittels einer Anzahl von Umfeldsensoren,
- Ableiten einer Anzahl von Verkehrsregeln basierend auf dem Umgebungszustand,
- Erzeugen der Regelkarte basierend zumindest auf den Verkehrsregeln, und
- Senden der Regelkarte an einen zentralen Server (5).

18. Verfahren nach Anspruch 17,
- welches ferner nach dem Schritt des Sendens einen Schritt des Empfangens einer Regelkarte von dem zentralen Server aufweist.

19. Verfahren nach einem der Ansprüche 17 oder 18,
- wobei das Verfahren ansprechend darauf ausgeführt wird, dass eine Annäherung an eine Kreuzung oder Einmündung erkannt wird,
- wobei die Annäherung bevorzugt mittels Umfeldsensoren, insbesondere mittels einer Kamera, mittels Satellitennavigation, mittels einer elektronischen Straßenkarte und/oder mittels Fahrzeug-zu-X-Kommunikation erkannt wird.

20. Verfahren nach Anspruch 19,
- wobei in der Regelkarte enthaltene Verkehrsregeln der Kreuzung oder Einmündung zugeordnet sind, insbesondere Vorfahrt und Vorfahrt gewähren.

21. Verfahren nach einem der Ansprüche 17 bis 20,
- wobei der zentrale Server mittels eines Verfahrens nach einem der Ansprüche 1 bis 16 betrieben wird.

22. Verfahren nach einem der vorhergehenden Ansprüche,
- wobei eine jeweilige Regelkarte über eine Funkverbindung, insbesondere in einer Fahrzeug-zu-X-Nachricht, zwischen einem Fahrzeug und dem zentralen Server oder zwischen unterschiedlichen Fahrzeugen übermittelt wird.

23. Verfahren nach einem der vorhergehenden Ansprüche,
- wobei zusammen mit einer jeweiligen Regelkarte eines oder mehrere der folgenden Elemente gesendet oder empfangen werden:
- ein Kennzeichen eines die Regelkarte sendenden Fahrzeugs,
- eine Identifikation eines die Regelkarte sendenden Fahrzeugs,
- eine Kreuzungstopologie,
- Objekteigenschaften, insbesondere Art, Position und/oder Trajektorie, eines die Regelkarte sendenden Fahrzeugs,
- Informationen über eine Zuverlässigkeit der Regelkarte und/oder über eine Zuverlässigkeit von Umfeldsensoren, insbesondere einer Kamera,
- Informationen über Fahrzeuge, welche nicht mit einer Technik zum Teilnehmen am Abstimmen von Verkehrsregeln ausgestattet sind, insbesondere welche nicht mit einer Fahrzeug-zu-X-Kommunikationstechnik ausgestattet sind, und insbesondere einschließlich deren Kennzeichen,
- ein Zuverlässigkeitsmaß.

24. Verfahren nach einem der vorhergehenden Ansprüche,
- wobei die Regelkarte, eine weitere Regelkarte, die erste Regelkarte, die zweite Regelkarte und/oder die zu sendende Regelkarte
- einer Kreuzung,
- einem Kreisverkehr
- einer Einmündung, insbesondere auf eine Autobahn,
- einer Engstelle,
- einer Haltestelle
und/oder
- einer Straße, insbesondere einer Straße mit Überholmöglichkeit,
zugeordnet ist.

## Claims

1. A method for operating a central server (5) for processing control cards containing traffic regulations,
wherein the method has the following steps:
- creating a control card to be sent in a synchronizing step, wherein the synchronizing step is executed in response to the fact that it has been established in the central server during a comparison that at least a first control card and a second control card do not correspond,
- sending the control card by the central server to a vehicle (20,22,24).

2. The method according to Claim 1,
- wherein the sending is executed by a vehicle in response to a reception of a request to send a control card,
- wherein the request preferably contains information on the control card to be sent.

3. The method according to any one of the preceding claims,
- wherein the sending is executed by a vehicle in response to a reception of a control card.

4. The method according to any one of the preceding claims,
- wherein the first control card has been received by a vehicle, and
- the second control card has been received by another vehicle or has been read from a database.

5. The method according to any one of the preceding claims,
- wherein the synchronizing step is performed for synchronization between a number of vehicles involved,
- wherein the control card to be sent is preferably sent to all of the vehicles involved.

6. The method according to any one of the preceding claims,
- wherein the vehicle as well as other vehicles which are approaching an intersection or junction or which are driving on the same road are involved in the synchronizing step; and/or
- wherein exclusively vehicles from which an intersection of respective trajectories has been calculated are involved in the synchronizing step.

7. The method according to any one of the preceding claims,
- wherein the synchronizing step is performed by matching control cards and/or plausibility information of involved vehicles.

8. The method according to Claim 7,
- wherein a matching of control cards and/or plausibility information includes a respective plausibility check,
- wherein a plausibility check preferably has one or more of the following steps:
- evaluating and/or weighting available information, in particular in relation to information from involved vehicles,
- determining the significance and/or reliability of information,
- checking which vehicles have identical information or have sent identical information,
- adding information if this is complementary.

9. The method according to any one of the preceding claims,
- wherein when performing the synchronizing step one or more of the following steps are executed, for example are executed iteratively:
- evaluating the significance and/or confidence level of information with thresholds or probabilities, for example for dangerous situations or the driving mode such as self-driving or automatically driving of a respective vehicle,
- plausibility checks, for example technical or statistical checks,
- bringing together information, in particular all available information,
- merging, in particular creating a new, for example extended, in particular spatially extended and/or refined image which in particular has a consistent content.

10. The method according to any one of the preceding claims,
- which, when performing the synchronizing step, further has a step of identifying a blockage.

11. The method according to Claim 10,
- wherein, in the case of a blockage, a control card is created which enables the best possible flow of traffic,
- in which vehicles which cannot participate in the process, in particular vehicles without vehicle-to-X communication technology, are let through with priority, and/or
- in which, in particular in the case of an impasse, priorities are allocated to vehicles on the basis of one or more of the following parameters:
- driving speed,
- fixed set of rules,
- driving direction, for example compass direction,
- reading of a respective right-of-way counter,
- navigation information,
- information about activated components such as a navigation system,
- information about operated turn indicators,
- information about automatic steering,
- information about giving way,
- destination,
- planned trajectory,
- special action rights or provision of special right-of-way features; or
- wherein, in the case of a blockage, the synchronizing step is interrupted.

12. The method according to any one of the preceding claims,
- wherein when performing the synchronizing step there is a random allocation of priorities to the vehicles involved,
- wherein a vehicle with a higher priority has right-of-way over vehicles with a lower priority.

13. The method according to any one of the preceding claims,
- which, if a termination criterion is met during the synchronizing step, has a step of terminating the synchronizing step.

14. The method according to any one of the preceding claims,
- wherein control cards are received by vehicles or sent to vehicles via a radio connection, in particular in a vehicle-to-X message.

15. The method according to any one of the preceding claims, which further has the following step:
- storing of a control card created in a synchronizing step, received by a vehicle or entered by a user in a database.

16. The method according to Claim 15,
- wherein the control card is evaluated, in particular checked for plausibility, on the basis of reliability information prior to being stored in the database,
- and the control card is only then stored in the database if the evaluation shows that the control card should be stored.

17. A method for handling a control card containing traffic regulations in a vehicle (20,22,24), which has the following steps:
- identifying the environmental conditions by means of a number of environmental sensors,
- deriving a number of traffic regulations based on the environmental conditions,
- producing the control card based at least on the traffic regulations, and
- sending the control card to a central server (5).

18. The method according to Claim 17,
- which further has, after the sending step, a step of receiving a control card from the central server.

19. The method according to any one of Claims 17 or 18,
- wherein the method is executed in response to the fact that an approach to an intersection or junction is identified,
- wherein the approach is identified preferably by means of environmental sensors, in particular by means of a camera, by means of satellite navigation, by means of an electronic road map and/or by means of vehicle-to-X communication.

20. The method according to Claim 19,
- wherein traffic regulations contained in the control card are assigned to the intersection or junction, in particular right-of-way and give way.

21. The method according to any one of Claims 17 to 20,
- wherein the central server is operated by means of a method according to any one of Claims 1 to 16.

22. The method according to any one of the preceding claims,
- wherein a respective control card is transmitted via a radio connection, in particular in a vehicle-to-X message, between a vehicle and the central server or between different vehicles.

23. The method according to any one of the preceding claims,
- wherein, together with a respective control card, one or more of the following elements are sent or received:
- a registration number of a vehicle sending the control card,
- an identification number of a vehicle sending the control card,
- a topology of the intersection,
- object properties, in particular type, position and/or trajectory, of a vehicle sending the control card,
- information about the reliability of the control card and/or about the reliability of environmental sensors, in particular a camera,
- information about vehicles which are not equipped with the technology for participating in the synchronization of traffic regulations, in particular which are not equipped with vehicle-to-X communication technology and, in particular, including the registration number thereof,
- a measure of reliability.

24. The method according to any one of the preceding claims,
wherein the control card, a further control card, the first control card, the second control card and/or the control card to be sent is/are assigned to
- an intersection,
- a traffic circle,
- a junction, in particular joining a freeway,
- a narrow section,
- a stopping point and/or
- a road, in particular a road where overtaking is possible.

## Revendications

1. Procédé pour l'exploitation d'un serveur central (5) pour la gestion de cartes de règles contenant des règles de circulation,
le procédé présentant les étapes suivantes :
- établissement d'une carte de règles devant être envoyée au cours d'une étape de vote, l'étape de vote étant exécutée en réponse au fait que, dans le serveur central, il a été déterminé lors d'une comparaison qu'au moins une première carte de règles et une deuxième carte de règles ne concordent pas,
- envoi de la carte de règles à un véhicule (20, 22, 24) par le serveur central.

2. Procédé selon la revendication 1,
- l'envoi étant exécuté en réponse à une réception d'une demande pour l'envoi d'une carte de règles d'un véhicule,
- la demande contenant de préférence des informations sur la carte de règles devant être envoyée.

3. Procédé selon l'une des revendications précédentes,
- l'envoi étant exécuté en réponse à une réception d'une carte de règles d'un véhicule.

4. Procédé selon l'une des revendications précédentes,
- la première carte de règles ayant été reçue d'un véhicule, et
- la deuxième carte de règles ayant été reçue d'un autre véhicule ou ayant été lue dans une base de données.

5. Procédé selon l'une des revendications précédentes,
- l'étape de vote étant effectuée pour le vote entre une multiplicité de véhicules participant,
- la carte de règles devant être envoyée étant envoyée de préférence à tous les véhicules participant.

6. Procédé selon l'une des revendications précédentes,
- les véhicules participant à l'étape de vote étant le véhicule ainsi que les autres véhicules qui s'approchent d'un carrefour ou d'un débouché ou qui roulent sur la même route ;
et/ou
- uniquement des véhicules pour lesquels un croisement de trajectoires respectives a été calculé participant à l'étape de vote.

7. Procédé selon l'une des revendications précédentes,
- l'étape de vote étant effectuée par comparaison de cartes de règles et/ou d'informations de plausibilisation de véhicules participant.

8. Procédé selon la revendication 7,
- une comparaison de cartes de règles et/ou d'informations de plausibilisation contenant une plausibilisation respective,
- une plausibilisation présentant de préférence une ou plusieurs étapes parmi les étapes suivantes :
- évaluation et/ou pondération d'informations existantes, en particulier relativement à des informations de véhicules participant,
- saisie de l'importance et/ou de la fiabilité d'informations,
- vérification des véhicules ayant des informations identiques ou ayant envoyé des informations identiques,
- compléter des informations lorsque celles-ci sont complémentaires.

9. Procédé selon l'une des revendications précédentes,
- une ou plusieurs étapes parmi les étapes suivantes étant exécutées, par exemple de façon itérative, lors de l'exécution de l'étape de vote :
- évaluation d'une importance et/ou d'une confiance d'informations avec valeurs de seuil ou probabilités, par exemple d'une situation de danger ou d'un mode de conduite comme la conduite autonome ou la conduite automatique d'un véhicule respectif,
- plausibilisation, par exemple technique ou statistique,
- collecte d'informations, en particulier de toutes les informations disponibles,
- fusion, en particulier génération d'une nouvelle image, par exemple élargie, en particulier élargie spatialement et/ou précisée, qui est cohérente relativement au contenu, en particulier.

10. Procédé selon l'une des revendications précédentes,
- lequel présente en outre une étape de détection d'un blocage lors de l'exécution de l'étape de vote.

11. Procédé selon la revendication 10,
- une carte de règles étant générée dans le cas d'un blocage, laquelle permet une circulation aussi fluide que possible,
- lors duquel le passage de véhicules sans possibilité de participation au procédé, en particulier de véhicules sans technique de communication V2X étant autorisé de façon prioritaire, et/ou
- lors duquel des priorités sont attribuées à des véhicules sur la base d'un ou de plusieurs des paramètres suivants, en particulier dans le cas d'une impasse :
- vitesse de déplacement,
- réglementation fixe,
- direction de déplacement, par exemple point cardinal,
- indication des compteurs de priorité respectifs,
- informations de navigation,
- informations sur des composants activés, tels un système de navigation,
- informations sur des clignotants actionnés,
- informations sur la direction automatique,
- informations sur un abandon,
- destination,
- trajectoire prévue,
- droits d'intervention spéciale ou existence de caractéristiques de priorité spéciales
ou
- l'étape de vote étant interrompue dans le cas d'un blocage.

12. Procédé selon l'une des revendications précédentes,
- une attribution aléatoires de priorités aux véhicules participant étant effectuée lors de l'exécution de l'étape de vote,
- un véhicule avec priorité supérieure ayant la priorité sur des véhicules avec priorité inférieure.

13. Procédé selon l'une des revendications précédentes,
- lequel, au cas où un critère d'interruption est rempli pendant l'étape de vote, présente une étape d'interruption de l'étape de vote.

14. Procédé selon l'une des revendications précédentes,
- des cartes de règles étant reçues de véhicules ou envoyées à des véhicules par une liaison radio, en particulier dans un message V2X.

15. Procédé selon l'une des revendications précédentes, lequel présente en outre l'étape suivante :
- enregistrement dans une base de données d'une carte de règles générée lors d'une étape de vote, reçue d'un véhicule ou entrée par un utilisateur.

16. Procédé selon la revendication 15,
- la carte de règles étant analysée dans la base de données avant l'enregistrement, en particulier plausibilisée à l'aide d'informations de fiabilité,
- et la carte de règles n'étant enregistrée dans la base de données que lorsque l'analyse affiche que la carte de règles doit être enregistrée.

17. Procédé pour la gestion d'une carte de règles contenant des règles de circulation dans un véhicule (20, 22, 24),
lequel présente les étapes suivantes :
- détection d'un état d'environnement au moyen d'une multiplicité de capteurs d'environnement,
- déduction d'une multiplicité de règles de circulation sur la base de l'état d'environnement,
- génération de la carte de règles au moins sur la base de règles de circulation, et
- envoi de la carte de règles à un serveur central (5).

18. Procédé selon la revendication 17,
- lequel présente en outre une étape de réception d'une carte de règles du serveur central après l'étape de l'envoi.

19. Procédé selon l'une des revendications 17 ou 18,
- le procédé étant exécuté en réponse au fait qu'une approche d'un carrefour ou d'un débouché est détectée,
- l'approche étant détectée de préférence au moyen de capteurs d'environnement, en particulier au moyen d'une caméra, au moyen de navigation par satellite, au moyen d'une carte routière électronique et/ou au moyen de la communication V2X.

20. Procédé selon la revendication 19,
- des règles de circulation contenues dans la carte de règles étant attribuées au carrefour ou au débouché, en particulier la priorité et accorder la priorité.

21. Procédé selon l'une des revendications 17 à 20,
- le serveur central étant exploité au moyen d'un procédé selon l'une des revendications 1 à 16.

22. Procédé selon l'une des revendications précédentes,
- une carte de règles respective étant transmise par une liaison radio, en particulier dans un message V2X, entre un véhicule et le serveur central ou entre différents véhicules.

23. Procédé selon l'une des revendications précédentes,
- un ou plusieurs des éléments suivants étant envoyés ou reçus conjointement avec une carte de règles respective :
- une caractéristique d'un véhicule envoyant la carte de règles,
- une immatriculation d'un véhicule envoyant la carte de règles,
- une topologie de carrefour,
- des propriétés d'objet, en particulier le type, la position et/ou la trajectoire, d'un véhicule envoyant la carte de règles,
- des informations sur une fiabilité de la carte de règles et/ou sur une fiabilité de capteurs d'environnement, en particulier d'une caméra,
- des informations sur des véhicules, lesquels ne sont pas équipés avec une technique pour la participation au vote de règles de circulation, en particulier lesquels ne sont pas équipés avec une technique de communication V2X, et en particulier comprenant leur immatriculation,
- un degré de fiabilité.

24. Procédé selon l'une des revendications précédentes,
- la carte de règles, une carte de règles supplémentaire, la première carte de règles, la deuxième carte de règles et/ou la carte de règles devant être envoyée étant attribuées à :
- un carrefour,
- un rond-point
- un débouché, en particulier sur une autoroute,
- un étranglement,
- un arrêt
et/ou
- une route, en particulier une route avec possibilité de dépassement.
